# EUROPÄISCHE PATENTSCHRIFT

(11) **EP 4 125 253 B1**
(45) Veröffentlichungstag und Bekanntmachung des Hinweises auf die Patenterteilung: **18.09.2024**
(21) Anmeldenummer: 21188161.0
(22) Anmeldetag: 28.07.2021
(51) Int. Cl.: H04L 61/5007, H04L 61/5038, H04L 101/622, H04L 69/40, H04L 12/46

(54) **VERFAHREN ZUR ÜBERMITTLUNG ZEITKRITISCHER DATEN, KOMMUNIKATIONSSYSTEM UND KOPPEL-KOMMUNIKATIONSGERÄT**
METHOD FOR TRANSMITTING TIME-CRITICAL DATA, COMMUNICATION SYSTEM AND COUPLING COMMUNICATION DEVICE
PROCÉDÉ DE TRANSMISSION DE DONNÉES TEMPORELLEMENT CRITIQUES, SYSTÈME DE COMMUNICATION ET APPAREIL DE COMMUNICATION COUPLÉE

(43) Veröffentlichungstag der Anmeldung: 01.02.2023
(73) Patentinhaber: Siemens Aktiengesellschaft, 80333 München (DE)
(72) Erfinder: Neumann, Markus, 76189 Karlsruhe (DE); Schwering, Wolfgang, 91341 Röttenbach (DE)
(74) Vertreter: Siemens Patent Attorneys

(56) Entgegenhaltungen:
- EP-A1- 3 787 237
- US-A1- 2020 084 144
- HUYNH M ET AL: "Resilience technologies in Ethernet", COMPUTER NETWORKS, ELSEVIER, AMSTERDAM, NL, vol. 54, no. 1, 15 January 2010 (2010-01-15), pages 57 - 78, XP026835579, ISSN: 1389-1286, [retrieved on 20090822]

## Beschreibung

Die vorliegende Erfindung betrifft ein Verfahren zur Übermittlung zeitkritischer Daten, das insbesondere für industrielle Automatisierungssysteme geeignet ist, sowie ein Kommunikationssystem und ein Koppel-Kommunikationsgerät zur Durchführung des Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit gro-βem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Mittels Common Address Redundancy Protocol (CARP) lassen sich Applikationsserver, Firewalls oder Router als hochverfügbare Systeme realisieren. Hierfür sind zumindest zwei zueinander redundante Systemkomponenten vorgesehen, die identische Aufgaben übernehmen können und demselben Subnetz zugeordnet sind. Die redundanten Systemkomponenten haben jeweils eine eindeutige IP- und MAC-Adresse und bilden einen Geräteverbund. Diesem Geräteverbund wird ebenfalls eine IP- und MAC-Adresse zugeordnet, über die andere Geräte oder Systeme mit dem Geräteverbund kommunizieren. Dabei übernimmt eine Systemkomponente des Geräteverbunds eine Master-Rolle zur Wahrnehmung der Aufgaben des Geräteverbunds, während die übrigen Systemkomponenten eine Slave-Rolle übernehmen. Wenn die Systemkomponente mit der Master-Rolle ausfällt, übernimmt eine Systemkomponente, der bisher eine Slave-Rolle zugeordnet war, dessen Aufgaben und ist über die dem Geräteverbund zugeordnete IP- bzw. MAC-Adresse erreichbar.

Während ein Ausfall einer Teilstrecke innerhalb einer Route durch dynamisches Routing bzw. Auswahl einer Alternativstrecke recht einfach kompensiert werden kann, ist ein Ausfall von in Endgeräten konfigurierten Default-Gateways problematischer. Steht das Default-Gateway nicht als erster Router für die Endgeräte zur Verfügung, ist grundsätzlich kein Routing aus einem betroffenen Subnetz heraus möglich. Mittels Hot Standby Router Protocol (HSRP) werden mehrere Router zu einer Gerätegruppe zusammengefasst, durch die ein logischer Router realisiert wird. Dem logischen Router wird eine IP- und MAC-Adresse zugeordnet, über die ein ausgewählter Primär-Router der Gerätegruppe erreichbar ist. Alle anderen Router stellen Sekundär-Router dar und sind bis auf Weiteres nicht über die dem logischen Router zugeordnete IP- bzw. MAC-Adresse erreichbar. Der Primär-Router signalisiert den Sekundär-Routern seine Funktionsbereitschaft mittels einer standardmäßig alle 3 Sekunden gesendeten Multicast-Nachrichten. Bleiben diese Multicast-Nachrichten über einen längeren Zeitraum, z.B. 10 Sekunden aus, wird ein bisheriger Sekundär-Router als neuer Primär-Router ausgewählt und bindet die dem logischen Router zugeordnete IP- bzw. MAC-Adresse an seine Netzwerkschnittstelle.

Probleme durch einen Ausfall eines Default-Gateways bzw. eines ersten Routers für Endgeräte können auch mittels Virtual Router Redundancy Protocol (VRRP) gelöst werden. Im Unterschied zu HSRP ermöglicht VRRP eine Verwendung einer IP-Adresse eines physikalisch vorhandenen Routers als IP-Adresse eines durch eine Gerätegruppe realisierten logischen Routers.

EP 3 646 559 B1 betrifft ein Verfahren zur Überprüfung von innerhalb eines industriellen Automatisierungssystems mit mehreren Automatisierungszellen übermittelten Datagrammen, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In EP 3 035 606 A1 ist ein Verfahren zur Datenübermittlung in einem zumindest 2 virtuelle lokale Netze umfassenden Kommunikationsnetz beschrieben, bei dem Datenströmen jeweils eine Datenstrom-individuelle Ziel-Gerätekennung zugeordnet wird. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt.

Aus der älteren internationalen Patentanmeldung WO 2021/ 239371 A1 ist ein Verfahren zur Übermittlung zeitkritischer Daten bekannt, bei dem Datagramme von einem ersten Kommunikationsgerät in einem ersten Teilnetz und zu einem zweiten Kommunikationsgerät in einem zweiten Teilnetz über ein drittes Teilnetz gesendet werden. Dabei sind das erste und das dritte Teilnetz über einen ersten Switch und das zweite und das dritte Teilnetz über einen zweiten Switch verbunden. Die Datagramme werden anhand einer Kennung eines ersten virtuellen lokalen Netzes und einer Prioritätsangabe vom ersten Kommunikationsgerät zum ersten Switch weitergeleitet. Der erste Switch kapselt die durch das erste Kommunikationsgerät gesendeten Datagramme jeweils in Datenrahmen ein, die einem Datenstrom durch das dritte Teilnetz zugeordnet sind, und fügt in die Datenrahmen eine Kennung eines zweiten virtuellen lokalen Netzes ein.

Anhand der Kennung des zweiten virtuellen lokalen Netzes werden entsprechend der älteren internationalen Patentanmeldung WO 2021/239371 A1 im dritten Teilnetz Ressourcen entlang eines ausgewählten Pfades reserviert. Der zweite Switch entnimmt die Datagramme, die in die dem Datenstrom zugeordneten Datenrahmen eingekapselt sind, aus empfangenen Datenrahmen und leitet die entnommenen Datagramme anhand der Kennung des ersten virtuellen lokalen Netzes und der Prioritätsangabe zum zweiten Kommunikationsgerät weiter.

In US 2020/084144 A1 ist ein Verfahren beschrieben, bei dem Netzwerkverkehr an einer redundanten Gateway-Vorrichtung empfangen wird, die gemäß einem redundanten Gateway-Protokoll eingerichtet ist. Bekannter Unicast-Verkehr, der an der redundanten Gateway-Vorrichtung empfangen wird, wird von der redundanten Gateway-Vorrichtung zu einem Tunnelendpunkt durch einen Tunnel weitergeleitet, der gemäß einem Tunneling-Protokoll aufgebaut ist. Broadcast-, unbekannter Unicast- und Multicast-Verkehr wird an den Tunnelendpunkt durch den Tunnel weitergeleitet, wenn die redundante Gateway-Vorrichtung ein Master-Gateway entsprechend dem redundanten Gateway-Protokoll ist. Der Broadcast-, unbekannte Unicast- und Multicast-Verkehr wird verworfen, wenn die redundante Gateway-Vorrichtung ein Backup-Gateway entsprechend dem redundanten Gateway-Protokoll ist.

Aus EP 3 787 237 A1 ist ein Verfahren zur Datenübermittlung in einem redundant betreibbaren Kommunikationsnetz bekannt, das zumindest ein erstes und ein zweites Teilnetz umfasst, die jeweils innerhalb einer Ringtopologie miteinander verbundene Kommunikationsgeräte umfassen. In beiden Teilnetzen ist jeweils ein Kommunikationsgerät mit einer aktivierten Ring-Steuerungseinheit vorgesehen. Die beiden Teilnetze sind über zwei Koppel-Strecken miteinander verbunden, an die jeweils zwei Koppel-Kommunikationsgeräte angeschlossen sind. Die Koppel-Strecke, an die ein ausgewähltes Koppel-Kommunikationsgerät angeschlossen ist, wird bis zu einem Störungseintritt als inaktive Reserve-Koppel-Strecke betrieben wird, während die andere Koppel-Strecke als aktive Haupt-Koppel-Strecke betrieben wird. Die an die Haupt-Koppel-Strecke angeschlossenen Koppel-Kommunikationsgeräte übermitteln Status-Datagramme an das ausgewählte Koppel-Kommunikationsgerät, die zusätzlich eine Konfigurationsinformation umfassen, ob das jeweilige an die Haupt-Koppel-Strecke angeschlossene Koppel-Kommunikationsgerät eine aktivierbare Ring-Steuerungseinheit umfasst.

Bei einer transparenten Übertragung von Datagrammen zwischen Sicherungsschicht-Teilnetzen, in denen Datagramme mittels Switching entsprechend OSI-Schicht 2 weitergeleitet werden, über Netzwerkschicht- bzw. Vermittlungsschicht-Teilnetze, in denen Datagramme mittels Routing entsprechend OSI-Schicht 3 weitergeleitet werden, ist nicht allein eine unverfälschte Übermittlung ursprünglicher Informationen wichtig. Vielmehr stellt sich gerade bei einer Nutzung von Tunnelungsprotokollen als Anforderung, dass eine Datenübermittlung über Netzwerktunnel robust gegenüber einem Ausfall von Systemkomponenten ist.

Grundsätzlich können mittels Ethernet VPN (EVPN) entsprechend IETF RFC8365 (siehe https://datatracker.ietf.org/doc/html/ rfc8365) zueinander redundante Tunnelendpunkte realisiert werden. Allerdings sind entsprechende Konzepte insbesondere in öffentlichen 5G-Mobilfunknetzen nur mit großem Aufwand realisierbar oder für eine Verwendung in einfacheren Automatisierungsnetze zu komplex.

Der vorliegenden Erfindung liegt die Aufgabe zugrunde, ein aufwandsarm realisierbares Verfahren zur transparenten Übermittlung zeitkritischer Daten über Vermittlungsschicht-Transitnetze schaffen, das eine Kompensation eines Ausfalls von Systemkomponenten ermöglicht, und eine geeignete Implementierung zur Durchführung des Verfahrens anzugeben.

Diese Aufgabe wird erfindungsgemäß durch ein Verfahren mit den in Patentanspruch 1 angegebenen Merkmalen, ein Kommunikationssystem mit den in Patentanspruch 11 angegebenen Merkmalen und durch ein Koppel-Kommunikationsgerät mit den in Patentanspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Übermittlung zeitkritischer Daten werden Datagramme von einem ersten Kommunikationsgerät in einem ersten Teilnetz und zu einem zweiten Kommunikationsgerät in einem zweiten Teilnetz über ein drittes Teilnetz gesendet. Dabei sind das erste und das dritte Teilnetz über zumindest einen ersten und einen zweiten Router verbunden, während das zweite und das dritte Teilnetz über zumindest einen dritten Router verbunden sind. Innerhalb des ersten und des zweiten Teilnetzes werden Datagramme jeweils mittels Switching weitergeleitet. Dagegen werden Datagramme innerhalb des dritten Teilnetzes mittels Routing weitergeleitet.

Darüber hinaus weist das erste Teilnetz erfindungsgemäß eine Ringtopologie auf und umfasst zumindest ein erstes Koppel-Kommunikationsgerät, das mit dem ersten Router verbunden ist, sowie ein zweites Koppel-Kommunikationsgerät, das mit dem zweiten Router verbunden ist. Das zweite Teilnetz umfasst ein drittes Koppel-Kommunikationsgerät, das mit dem dritten Router verbunden ist und dem eine Netzwerkschicht-Adresse zugeordnet wird. Des Weiteren wählen das erste und zweite Koppel-Kommunikationsgerät untereinander ein Master-Koppel-Kommunikationsgerät aus. Dabei wird beiden Koppel-Kommunikationsgeräten bzw. dem Master-Koppel-Kommunikationsgerät eine gemeinsame virtuelle Netzwerkschicht-Adresse zugeordnet. Das nicht als Master-Kommunikationsgerät ausgewählte erste oder zweite Koppel-Kommunikationsgerät wird als Reserve-Koppel-Kommunikationsgerät betrieben. Die Koppel-Kommunikationsgeräte sind insbesondere Switches.

Das erste und zweite Koppel-Kommunikationsgerät wählen erfindungsgemäß mittels Virtual Router Redundancy Protocol (VRRP) untereinander das Master-Koppel-Kommunikationsgerät aus. Die virtuelle Netzwerkschicht-Adresse des ersten und zweiten Koppel-Kommunikationsgeräts kann dabei vorteilhafterweise ebenfalls mittels VRRP bereitgestellt werden. Insbesondere können im ersten Teilnetz Informationen über die virtuelle Netzwerkschicht-Adresse des ersten und zweiten Koppel-Kommunikationsgeräts mittels VRRP Advertisments zur Nutzung des Sicherungsschicht-Tunnels verbreitet werden.

Erfindungsgemäß wird zumindest zwischen dem Master-Koppel-Kommunikationsgerät und dem dritten Koppel-Kommunikationsgerät ein Sicherungsschicht-Tunnel über den ersten bzw. zweiten Router sowie über den dritten Router durch das dritte Teilnetz aufgebaut. Dabei werden die vom ersten Kommunikationsgerät an das zweite Kommunikationsgerät gesendeten Datagramme innerhalb des Sicherungsschicht-Tunnels in Tunnel-Datenrahmen eingekapselt, insbesondere jeweils durch Einfügen in einen Nutzdatenbereich der Tunnel-Datenrahmen. Ein erster Endpunkt des Sicherungsschicht-Tunnels wird mit der virtuellen Netzwerkschicht-Adresse des ersten und zweiten Koppel-Kommunikationsgeräts konfiguriert. Demgegenüber wird ein zweiter Endpunkt des Sicherungsschicht-Tunnels mit der Netzwerkschicht-Adresse des dritten Koppel-Kommunikationsgeräts konfiguriert. Die Tunnel-Datenrahmen, in welche die vom ersten Kommunikationsgerät an das zweite Kommunikationsgerät gesendeten Datagramme jeweils eingekapselt werden, sind VXLAN Frames oder Frames zur Layer 2 Tunnelung der Datagramme.

Das erste Teilnetz weist erfindungsgemäß eine Ringtopologie auf, und Datagramme innerhalb des ersten Teilnetzes werden entsprechend Media Redundancy Protocol (MRP) übermittelt. Bei einer geänderten Auswahl oder bei einem Ausfall des Master-Koppel-Kommunikationsgeräts eine MRP-Interconnection-Topologieänderung signalisiert. Durch eine Signalisierung der MRP-Interconnection-Topologieänderung wird bei sämtlichen Kommunikationsgeräten des ersten Teilnetzes, die insbesondere Switches oder Bridges sein können, ein erneutes Anlernen ihrer jeweiligen Sicherungsschicht-Adress-Tabellen ausgelöst. Auf diese Weise können die Kommunikationsgeräte innerhalb des ersten Teilnetzes hinsichtlich ihrer Konfiguration schnell und zuverlässig an eine geänderte Auswahl des als Master-Koppel-Kommunikationsgerät betriebenen Koppel-Kommunikationsgeräts angepasst werden.

Die vorliegende Erfindung ermöglicht somit eine einfache, automatisierte Konfiguration von zueinander redundanten Tunnelendpunkten sowie eine automatische Umkonfiguration hiervon betroffener Kommunikationsgeräte im ersten Teilnetz. Auf diese Weise können zeitkritische Daten redundant und transparent über Vermittlungsschicht-Transitnetze übermittelt werden, ohne dass ein Ausfall eines einzelnen Tunnelendpunktes zu einer Unterbrechung eines Sicherungsschicht-Tunnels führt. Durch Verwendung von VRRP zur Auswahl des Master-Koppel-Kommunikationsgeräts und zur Bereitstellung einer virtuellen Netzwerkschicht-Adresse für das erste und zweite Koppel-Kommunikationsgerät bzw. für das Master-Koppel-Kommunikationsgerät kann eine zuverlässige und aufwandsarme Implementierung erzielt werden. Darüber hinaus können mit der vorliegenden Erfindung grundsätzlich beliebig viele zueinander redundante Tunnelendpunkte genutzt werden. Die Auswahl des Master-Koppel-Kommunikationsgeräts und die Bereitstellung der virtuelle Netzwerkschicht-Adresse ist nicht auf zwei Koppel-Kommunikationsgeräte beschränkt, sondern kann problemlos auf eine höhere Anzahl an zueinander redundanten Koppel-Kommunikationsgeräten erweitert werden.

Entsprechend einer besonders bevorzugten Ausgestaltung der vorliegenden Erfindung bilden zumindest das erste und zweite Koppel-Kommunikationsgerät eine Gruppe von Koppel-Kommunikationsgeräten, die einem virtuellen Sicherungsschicht-Tunnelendpunkt zugeordnet sind. Dabei tauschen die Koppel-Kommunikationsgeräte aus derselben einem virtuellen Sicherungsschicht-Tunnelendpunkt zugeordneten Gruppe untereinander Informationen über ihren jeweiligen Betriebszustand aus und überwachen das Master-Koppel-Kommunikationsgerät anhand dieser Informationen auf einen Ausfall. Bei einem Ausfall eines zuvor aktiven Master-Koppel-Kommunikationsgeräts wählen sämtliche Reserve-Koppel-Kommunikationsgeräte untereinander ein neues Master-Koppel-Kommunikationsgerät aus.

Das erste Kommunikationsgerät kann in die an das zweite Kommunikationsgerät gesendeten Datagramme beispielsweise eine Kennung eines virtuellen lokalen Netzes sowie eine Prioritätsangabe einfügen. Vorteilhafterweise werden die Datagramme anhand der Kennung des ersten virtuellen lokalen Netzes und der Prioritätsangabe vom ersten Kommunikationsgerät zum Master-Koppel-Kommunikationsgerät weitergeleitet. Das Master-Koppel-Kommunikationsgerät kapselt die durch das erste Kommunikationsgerät gesendeten Datagramme dementsprechend jeweils in die Tunnel-Datenrahmen ein. Demgegenüber entnimmt das dritte Koppel-Kommunikationsgerät die Datagramme, die in die Tunnel-Datenrahmen eingekapselt sind, aus empfangenen Tunnel-Datenrahmen und leitet die entnommenen Datagramme anhand der Kennung des virtuellen lokalen Netzes und der Prioritätsangabe zum zweiten Kommunikationsgerät weiter. Somit können Kennungen virtueller lokaler Netze und Prioritätsangaben zur Übermittlung von Datagrammen, insbesondere Datagramme in OSI-Schicht-2-Netzen, auch in Zusammenhang mit einer Verwendung überlagerter OSI-Schicht-3-Transitnetze transparent genutzt werden.

Das erste und das zweite Teilnetz können insbesondere zu PROFINET-Zellen zugeordnet sein, während das dritte Teilnetz ein IP-basiertes Transitnetz sein kann. Dabei sind die Datagramme PROFINET Frames. Da sich oben beschriebenes Verfahren zur Konfiguration der Tunnelendpunkte auch für Tunnelendpunkte in Mobilfunknetzen einfach umsetzen lässt, kann das zweite Teilnetz ein Mobilfunknetz, insbesondere ein 5G-Mobilfunknetz, umfassen, während das dritte Teilnetz ein IP-basiertes Transitnetz ist.

Vorzugsweise wird die MRP-Interconnection-Topologieänderung mittels eines MRP_InTopologyChange-Frames signalisiert, und die Sicherungsschicht-Adress-Tabellen sind jeweils als Forwarding Database ausgestaltet. In diesem Fall wird durch die Signalisierung der MRP-Interconnection-Topologieänderung bei sämtlichen Kommunikationsgeräten des ersten Teilnetzes ein erneutes Anlernen ihrer jeweiligen Forwarding Database ausgelöst. Entsprechend einer weiteren vorteilhaften Ausgestaltung der vorliegenden Erfindung wird durch die Signalisierung der MRP-Interconnection-Topologieänderung bei Routern entlang des Sicherungsschicht-Tunnels ein erneutes Anlernen zumindest einer dem ersten Endpunkt des Sicherungsschicht-Tunnels zugeordneten Sicherungsschicht-Adresse ausgelöst.

Das erfindungsgemäße Kommunikationssystem ist zur Durchführung eines Verfahrens entsprechend vorangehenden Ausführungen vorgesehen und weist ein erstes Teilnetz auf, das zumindest ein erstes Kommunikationsgerät, ein erstes Koppel-Kommunikationsgerät und ein zweites Koppel-Kommunikationsgerät umfasst. Außerdem weist das Kommunikationssystem ein zweites Teilnetz auf, das zumindest ein zweites Kommunikationsgerät und ein drittes Koppel-Kommunikationsgerät umfasst. Darüber hinaus ist ein drittes Teilnetz vorgesehen, das zumindest einen ersten Router, einen zweiten Router und einen dritten Router umfasst. Dabei sind das erste und das dritte Teilnetz über zumindest den ersten und den zweiten Router verbunden, während das zweite und das dritte Teilnetz über zumindest den dritten Router verbunden sind.

Die Kommunikationsgeräte und Koppel-Kommunikationsgeräte des erfindungsgemäßen Kommunikationssystems sind dazu ausgestaltet, Datagramme innerhalb des ersten und des zweiten Teilnetzes jeweils mittels Switching weiterzuleiten. Demgegenüber sind die Router des erfindungsgemäßen Kommunikationssystems dazu ausgestaltet, Datagramme innerhalb des dritten Teilnetzes mittels Routing weiterzuleiten. Darüber hinaus weist das erste Teilnetz des erfindungsgemäßen Kommunikationssystems eine Ringtopologie auf, und das erste Koppel-Kommunikationsgerät ist mit dem ersten Router verbunden, während das zweite Koppel-Kommunikationsgerät mit dem zweiten Router verbunden ist. Ferner ist das dritte Koppel-Kommunikationsgerät mit dem dritten Router verbunden und weist eine zugeordnete Netzwerkschicht-Adresse auf. Das erste Teilnetz ist dafür ausgestaltet, dass Datagramme innerhalb des ersten Teilnetzes entsprechend Media Redundancy Protocol (MRP) übermittelt werden.

Das erste und zweite Koppel-Kommunikationsgerät des erfindungsgemäßen Kommunikationssystems sind dazu ausgestaltet, untereinander ein Master-Koppel-Kommunikationsgerät mittels Virtual Router Redundancy Protocol (VRRP) auszuwählen und einer gemeinsamen virtuellen Netzwerkschicht-Adresse zugeordnet zu werden. Außerdem sind das erste und zweite Koppel-Kommunikationsgerät dazu ausgestaltet, dass das nicht als Master-Kommunikationsgerät ausgewählte erste oder zweite Koppel-Kommunikationsgerät als Reserve-Koppel-Kommunikationsgerät betrieben wird. Darüber hinaus sind erste und zweite Koppel-Kommunikationsgerät des erfindungsgemäßen Kommunikationssystems dazu ausgestaltet, dass bei einer geänderten Auswahl oder bei einem Ausfall des Master-Koppel-Kommunikationsgeräts eine MRP-Interconnection-Topologieänderung signalisiert wird und dass durch ein Signalisieren der MRP-Interconnection-Topologieänderung bei Kommunikationsgeräten des ersten Teilnetzes ein erneutes Anlernen ihrer jeweiligen Sicherungsschicht-Adress-Tabellen ausgelöst wird.

Die Koppel-Kommunikationsgeräte des erfindungsgemäßen Kommunikationssystems sind dazu ausgestaltet, dass zwischen dem Master-Koppel-Kommunikationsgerät und dem dritten Koppel-Kommunikationsgerät ein Sicherungsschicht-Tunnel über den ersten oder zweiten Router sowie über den dritten Router durch das dritte Teilnetz aufgebaut wird und dass vom ersten Kommunikationsgerät an das zweite Kommunikationsgerät gesendete Datagramme innerhalb des Sicherungsschicht-Tunnels in Tunnel-Datenrahmen eingekapselt werden. Dabei sind die Tunnel-Datenrahmen, in welche die vom ersten Kommunikationsgerät an das zweite Kommunikationsgerät gesendeten Datagramme jeweils eingekapselt sind, VXLAN Frames oder Frames zur Layer 2 Tunnelung der Datagramme. Darüber hinaus sind die Koppel-Kommunikationsgeräte dazu ausgestaltet, dass ein erster Endpunkt des Sicherungsschicht-Tunnels mit der virtuellen Netzwerkschicht-Adresse des ersten und zweiten Koppel-Kommunikationsgeräts konfiguriert wird. Ferner sind die Koppel-Kommunikationsgeräte dazu ausgestaltet, dass ein zweiter Endpunkt des Sicherungsschicht-Tunnels mit der Netzwerkschicht-Adresse des dritten Koppel-Kommunikationsgeräts konfiguriert wird.

Das erfindungsgemäße Koppel-Kommunikationsgerät ist zur Durchführung eines Verfahrens entsprechend vorangehenden Ausführungen vorgesehen und analog zu den Koppel-Kommunikationsgeräten des erfindungsgemäßen Kommunikationssystems ausgestaltet.

Die vorliegende Erfindung wird nachfolgend an einem Ausführungsbeispiel näher erläutert. Es zeigt
- Figur 1: ein mehrere Teilnetze umfassendes Kommunikationssystem zur Übermittlung zeitkritischer Daten mit mehreren Sicherungsschicht-Tunneln,
- Figur 2: das Kommunikationssystem gemäß Figur 1 nach einer Umschaltung von Endpunkten der Sicherungsschicht-Tunnel,
- Figur 3: eine schematische Darstellung eines innerhalb des Kommunikationssystems gemäß Figur 1 zwischen Kommunikationsgeräten unterschiedlicher Teilnetze ausgetauschten Datagramms vor einer Einkapselung in einen Tunnel-Datenrahmen,
- Figur 4: eine schematische Darstellung eines Tunnel-Datenrahmens, in den das Datagramm gemäß Figur 3 eingekapselt wird.

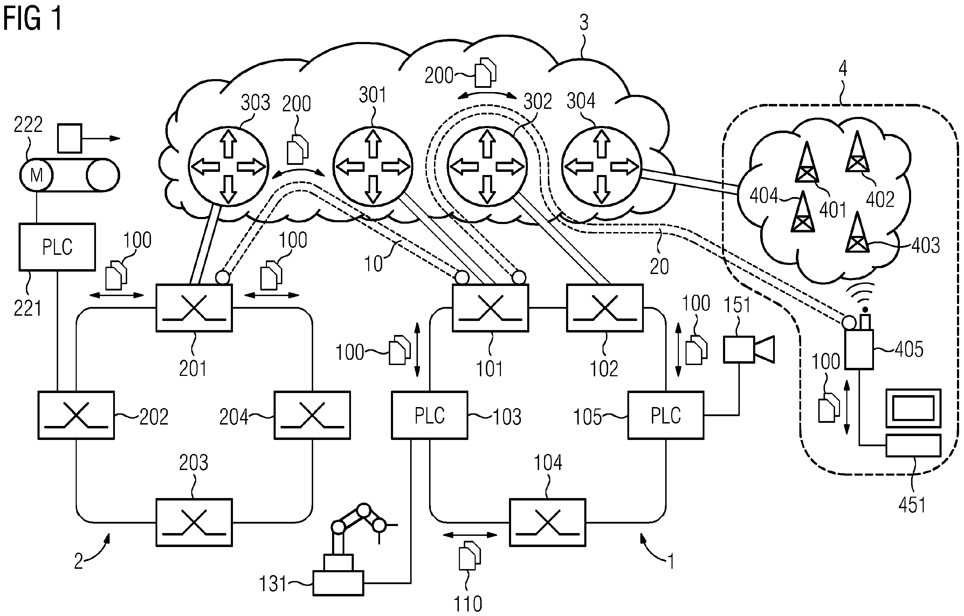

Das in Figur 1 dargestellte Kommunikationssystem für ein industrielles Automatisierungssystem ist in vier Teilnetze 1-4 gegliedert. Innerhalb eines ersten Teilnetzes 1 und eines zweiten Teilnetzes 2 werden Datagramme 100 jeweils mittels Switching weitergeleitet. Hierzu umfassen das erste Teilnetz 1 und zweite Teilnetz 2 jeweils mehrere Bridges bzw. Switches 101-102, 104, 201-204 als Datagramme weiterleitende Kommunikationsgeräte sowie Automatisierungsgeräte 103, 105, wie speicherprogrammierbare Steuerungen, mit Bridge- bzw. Switch-Funktion. Die Switches 101-102, 104, 201-204 umfassen jeweils mehrere Ports und dienen insbesondere zum Anschluss von speicherprogrammierbaren Steuerungen 103, 105, 221, Bedien- und Beobachtungsstationen, I/O-Controllern oder I/O-Modulen, die ebenfalls Kommunikationsgeräte bzw. Kommunikationsendgeräte darstellen.

Speicherprogrammierbare Steuerungen 103, 105, 221 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 103, 105, 221 mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung 103, 105, 221 und einer durch die jeweilige speicherprogrammierbare Steuerung 103, 105, 221 gesteuerten Maschine oder Vorrichtung 131, 151, 222. Die Zentraleinheit ist insbesondere für eine Ermittlung geeigneter Steuerungsgrößen aus erfassten Messgrö-βen vorgesehen. Obige Komponenten einer speicherprogrammierbaren Steuerung 103, 105, 221 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Innerhalb eines dritten Teilnetzes 3, das im vorliegenden Ausführungsbeispiel ein überlagertes, IP-basiertes Transitnetz ist, werden Datagramme 200 mittels Routing weitergeleitet. Hierzu umfasst das dritte Teilnetz 3 mehrere Router 301-304. Das erste Teilnetz 1 und das dritte Teilnetz 3 sind über zumindest einen ersten Router 301 und einen zweiten Router 302 verbunden, während das zweite Teilnetz 2 und das dritte Teilnetz 3 über zumindest einen dritten Router 303 verbunden sind.

Zur Kopplung des ersten Teilnetzes 1 an das dritte Teilnetz 3 umfasst das erste Teilnetz 1 zumindest ein erstes Koppel-Kommunikationsgerät 101, das mit dem ersten Router 301 verbunden ist, und ein zweites Koppel-Kommunikationsgerät 102, das mit dem zweiten Router 302 verbunden ist. Dabei sind die beiden Koppel-Kommunikationsgeräte 101-102 zueinander redundant. Das zweite Teilnetz 2 umfasst im vorliegenden Ausführungsbeispiel dagegen nur ein Koppel-Kommunikationsgerät 201, das mit dem dritten Router 303 verbunden ist und ein drittes Koppel-Kommunikationsgerät des Kommunikationssystems gemäß Figur 1 darstellt.

Im vorliegenden Ausführungsbeispiel weisen sowohl das erste Teilnetz 1 als auch das zweite Teilnetz 2 eine Ringtopologie und somit eine Grundlage zur Anwendung von Ringredundanz-Protokollen, wie Media Redundancy Protocol (MRP) oder Highavailability Seamless Redundancy Protocol (HSR), auf. Vorzugsweise werden Datagramme 100 innerhalb des ersten Teilnetzes 1 bzw. des zweiten Teilnetzes 2 dementsprechend übermittelt. Insbesondere können das erste Teilnetz 1 und das zweite Teilnetz 2 zu PROFINET-Zellen zugeordnet sein. In diesem Fall sind die Datagramme 100 PROFINET Frames.

Grundsätzlich können das erste Teilnetz 1 bzw. das zweite Teilnetz 2 auch eine Baumtopologie aufweisen und somit eine Grundlage zur Anwendung von Spannbaum-Protokollen, wie Spanning Tree Protocol (STP), Multiple Spanning Tree Protocol (MSTP) oder Rapid Spanning Tree Protocol (RSTP), bieten. Auch derartige Spannbaum-Protokollen bieten Redundanzfunktionen und ermöglichen eine Kompensation eines Ausfalls einzelner Übertragungsstrecken bzw. Links.

Zusätzlich umfasst das Kommunikationssystem ein viertes Teilnetz 4, das in vergleichbarer Weise wie das zweite Teilnetz 2 mit dem dritten Teilnetz 3 gekoppelt ist und ein Mobilfunknetz, insbesondere ein 5G-Mobilfunknetz, mit mehreren Basisstationen 401-404 umfasst. Dabei sind das vierte Teilnetz 4 und das dritte Teilnetz 3 über zumindest einen vierten Router 304 verbunden. Mit diesen Basisstationen 401-404 ist beispielsweise Mobilfunk-Modem 405 verbindbar, an das ein Automatisierungsgerät 451, beispielsweise eine Bedien- und Beobachtungsstation, angeschlossen ist. Dabei stellt das Mobilfunk-Modem 451 ein viertes Koppel-Kommunikationsgerät zur Anbindung der Bedien- und Beobachtungsstation 451 an das überlagerte dritte Teilnetz 3 dar.

Eine Bedien- und Beobachtungsstation 451 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 451 zur Anzeige von Werten eines Regelungskreises und zur Veränderung von Regelungsparametern verwendet. Bedien- und Beobachtungsstationen 451 umfassen zumindest eine graphische Benutzerschnittstelle, ein Eingabegerät, eine Prozessoreinheit und ein Kommunikationsmodul.

Im Kommunikationssystem werden insbesondere Datagramme 100 zwischen einem ersten Kommunikationsgerät im ersten Teilnetz 1 und einem zweiten Kommunikationsgerät im zweiten Teilnetz 2 über das überlagerte dritte Teilnetz 3 ausgetauscht, also bidirektional gesendet und empfangen. Dabei können beispielsweise die speicherprogrammierbaren Steuerungen 103, 105 im ersten Teilnetz 1 ein erstes Kommunikationsgerät darstellen, während die speicherprogrammierbare Steuerung 221 im zweiten Teilnetz 2 ein zweites Kommunikationsgerät darstellen kann.

Das erste Koppel-Kommunikationsgerät 101 und das zweite Koppel-Kommunikationsgerät 102 sind jeweils dazu ausgestaltet, gemeinsam mit dem jeweils anderen Koppel-Kommunikationsgerät untereinander ein Master-Koppel-Kommunikationsgerät auszuwählen und einer gemeinsamen virtuellen Netzwerkschicht-Adresse (Adresse für OSI-Schicht 3) zugeordnet zu werden. Außerdem sind beide Koppel-Kommunikationsgeräte 101, 102 dazu ausgestaltet, dass das nicht als Master-Kommunikationsgerät ausgewählte erste oder zweite Koppel-Kommunikationsgerät als Reserve-Koppel-Kommunikationsgerät betrieben wird. Entsprechend Figur 1 ist das erste Koppel-Kommunikationsgerät 101 als Master-Kommunikationsgerät ausgewählt.

Entsprechend dem erfindungsgemäßen Verfahren wählen die beiden zueinander redundanten Koppel-Kommunikationsgeräte 101, 102 mittels Virtual Router Redundancy Protocol (VRRP) untereinander das Master-Koppel-Kommunikationsgerät aus. Dementsprechend wird auch virtuelle Netzwerkschicht-Adresse der beiden zueinander redundanten Koppel-Kommunikationsgeräte 101, 102 mittels VRRP bereitgestellt. Darüber hinaus werden im ersten Teilnetz 1 Informationen über die virtuelle Netzwerkschicht-Adresse der beiden zueinander redundanten Koppel-Kommunikationsgeräte 101, 102 mittels VRRP Advertisments 110 zur Nutzung des Sicherungsschicht-Tunnels 10 verbreitet.

Zwischen dem Master-Koppel-Kommunikationsgerät 101 bzw. 102 und dem dritten Koppel-Kommunikationsgerät 201 wird ein Sicherungsschicht-Tunnel 10 über den ersten Router 301 bzw. über den zweiten Router 302 sowie über den dritten Router 303 durch das dritte Teilnetz 3 aufgebaut. Dabei werden vom ersten Kommunikationsgerät 103, 105 an das zweite Kommunikationsgerät 221 gesendete Datagramme 100 innerhalb des Sicherungsschicht-Tunnels 10 in Tunnel-Datenrahmen 200 eingekapselt. In umgekehrter Richtung gilt dies analog.

Das Master-Koppel-Kommunikationsgerät kapselt die vom ersten Kommunikationsgerät an das zweite Kommunikationsgerät gesendeten Datagramme 100 jeweils durch Einfügen in einen Nutzdatenbereich der Tunnel-Datenrahmen 200 ein. Vorzugsweise sind die Tunnel-Datenrahmen 200, in welche die vom ersten Kommunikationsgerät an das zweite Kommunikationsgerät gesendeten Datagramme 200 jeweils eingekapselt werden, VXLAN Frames oder Frames zur Layer 2 Tunnelung der Datagramme.

Im vorliegenden Ausführungsbeispiel wird auch zwischen dem Master-Koppel-Kommunikationsgerät 101 bzw. 102 und dem vierten Koppel-Kommunikationsgerät 405 ein weiterer Sicherungsschicht-Tunnel 20 über den ersten Router 301 bzw. über den zweiten Router 302 sowie über den vierten Router 304 durch das dritte Teilnetz 3 aufgebaut. Dabei werden vom ersten Kommunikationsgerät 103, 105 an die Bedien- und Beobachtungsstation 451 gesendete Datagramme 100 innerhalb des weiteren Sicherungsschicht-Tunnels 20 in Tunnel-Datenrahmen 200 eingekapselt. Ansonsten erfolgen eine Übermittlung von Daten über den weiteren Sicherungsschicht-Tunnel 20 sowie eine Konfiguration und ein Aufbau des weiteren Sicherungsschicht-Tunnels 20 analog zu einer Verwendung des Sicherungsschicht-Tunnels 10. Dementsprechend gelten nachfolgende Ausführungen zum Sicherungsschicht-Tunnel 10 in sinngemäßer Weise auch für den weiteren Sicherungsschicht-Tunnel 20.

Die beiden zueinander redundanten Koppel-Kommunikationsgeräte 101, 102 sind jeweils dazu ausgestaltet, dass ein erster Endpunkt des Sicherungsschicht-Tunnels 100 mit der virtuellen Netzwerkschicht-Adresse des ersten und zweiten Koppel-Kommunikationsgeräts bzw. des Master-Koppel-Kommunikationsgeräts konfiguriert wird, während ein zweiter Endpunkt des Sicherungsschicht-Tunnels 10 mit einer Netzwerkschicht-Adresse des dritten Koppel-Kommunikationsgeräts 201 konfiguriert wird. Dabei ist der erste Endpunkt dem ersten Teilnetz 1 zugeordnet, und der zweite Endpunkt ist dem zweiten Teilnetz 2 zugeordnet.

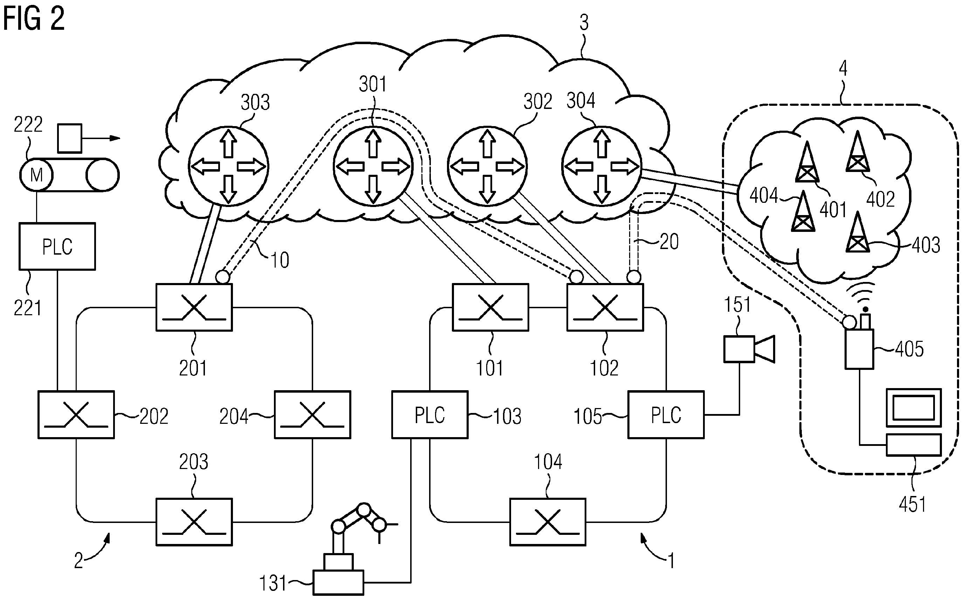

Die zueinander redundanten Koppel-Kommunikationsgerät 101, 102 bilden eine Gruppe von Koppel-Kommunikationsgeräten, die einem virtuellen Sicherungsschicht-Tunnelendpunkt zugeordnet sind. Die Koppel-Kommunikationsgeräte aus derselben einem virtuellen Sicherungsschicht-Tunnelendpunkt zugeordneten Gruppe tauschen untereinander Informationen über ihren jeweiligen Betriebszustand aus und überwachen das jeweilige Master-Koppel-Kommunikationsgerät anhand dieser Informationen auf einen Ausfall. Bei einem Ausfall eines zuvor aktiven Master-Koppel-Kommunikationsgeräts wählen grundsätzlich sämtliche Reserve-Koppel-Kommunikationsgeräte untereinander ein neues Master-Koppel-Kommunikationsgerät aus. Fällt beispielsweise das erste Koppel-Kommunikationsgerät 101 als aktiven Master-Koppel-Kommunikationsgerät aus, so übernimmt das zweite Koppel-Kommunikationsgerät 102 dessen Rolle als Master-Koppel-Kommunikationsgerät. Entsprechend Figur 2 wird der Sicherungsschicht-Tunnel 10 in diesem Fall über den zweiten Router 302 und den dritten Router 303 aufgebaut. Analog dazu wird der weitere Sicherungsschicht-Tunnel 20 über den zweiten Router 302 und den vierten Router 304 aufgebaut.

Die Datagramme 100 werden innerhalb des ersten Teilnetzes 1 entsprechend Media Redundancy Protocol (MRP) übermittelt, somit kann bei einer geänderten Auswahl oder bei einem Ausfall des Master-Koppel-Kommunikationsgeräts eine MRP-Interconnection-Topologieänderung signalisiert werden. Eine MRP-Interconnection-Topologieänderung kann beispielsweise mittels eines MRP_InTopologyChange-Frames signalisiert werden. Durch ein Signalisieren der MRP-Interconnection-Topologieänderung wird bei Kommunikationsgeräten 101-105 des ersten Teilnetzes 1 vorteilhafterweise ein erneutes Anlernen ihrer jeweiligen Sicherungsschicht-Adress-Tabellen bzw. Forwarding Database (FDB) ausgelöst. Vorzugsweise lernen sämtliche Kommunikationsgeräte 101-105 des ersten Teilnetzes 1 ihre jeweilige Forwarding Database bei einer MRP-Interconnection-Topologieänderung neu an. In entsprechender Weise wird durch die Signalisierung der MRP-Interconnection-Topologieänderung bei Routern 301-304 entlang eines Sicherungsschicht-Tunnels 10, 20 ein erneutes Anlernen einer dem ersten Endpunkt des Sicherungsschicht-Tunnels 10, 20 zugeordneten Sicherungsschicht-Adresse ausgelöst.

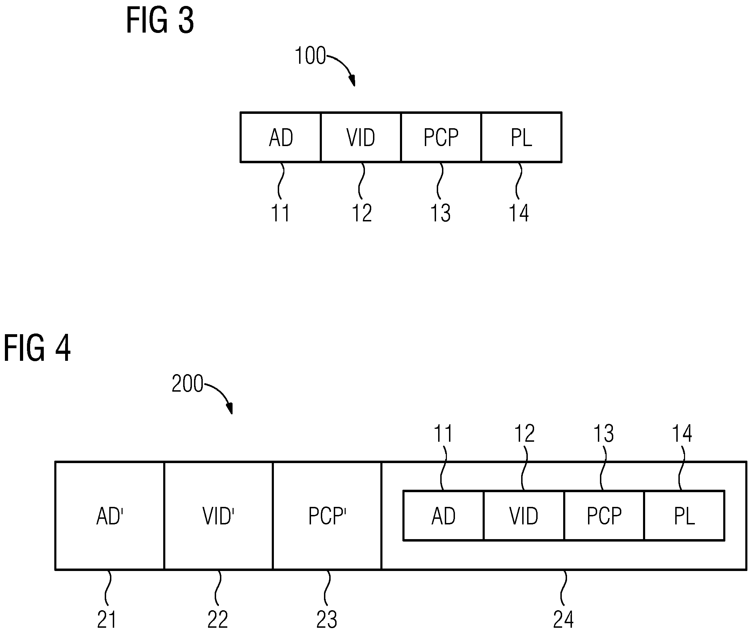

Das erste Kommunikationsgerät, beispielsweise eine der speicherprogrammierbaren Steuerungen 103, 105, fügt im vorliegenden Ausführungsbeispiel entsprechend Figur 3 in die Datagramme 100, die an das zweite Kommunikationsgerät, beispielsweise die speicherprogrammierbaren Steuerung 221, gesendet werden, eine Kennung 12 eines ersten VLAN, beispielsweise VID=0, sowie eine Prioritätsangabe 13, beispielsweise PCP=6, ein. Auf diese Weise werden in PROFINET-Zellen, die das erste Teilnetz 1 bzw. das zweite Teilnetz 2 umfassen, hochpriorisierte Steuerungsdaten gekennzeichnet, die in den PROFINET-Zellen zyklisch innerhalb vorgegebener bzw. reservierter Zeitfenster übermittelt werden. Hierzu werden im vorliegenden Ausführungsbeispiel sämtliche Kommunikationsgeräte 101-105, 201-204, 221 in den PROFINET-Zellen taktsynchron betrieben. Anhand der Kennung 12 des ersten virtuellen lokalen Netzes und der Prioritätsangabe 12 werden die Datagramme vom ersten Kommunikationsgerät zum Master-Koppel-Kommunikationsgerät weitergeleitet. Die Datagramme 100 umfassen einen Adressbereich 11 und einen Nutzdatenbereich 14 und entsprechen im vorliegenden Ausführungsbeispiel hinsichtlich ihrer Struktur grundsätzlich Ethernet-Frames.

Das Master-Koppel-Kommunikationsgerät kapselt die durch das erste Kommunikationsgerät gesendeten Datagramme 100 entsprechend Figur 4 jeweils durch Einfügen in einen Nutzdatenbereich 24 der Tunnel-Datenrahmen 200 ein. Dabei umfasst der Nutzdatenbereich 24 der Tunnel-Datenrahmen 200 insbesondere die Kennung 12 des ersten VLAN und die Prioritätsangabe 13 für eine Weiterleitung innerhalb des ersten bzw. zweiten Teilnetzes. Außerdem umfassen die Tunnel-Datenrahmen 200 einen Adressbereich 21 und entsprechen hinsichtlich ihrer Struktur Ethernet-Frames. Zusätzlich kann in die Tunnel-Datenrahmen 200 eine zur Durchleitung durch den Sicherungsschicht-Tunnel 10 verwendete Kennung 22 eines zweiten VLAN, beispielsweise VID'=1, sowie eine Prioritätsangabe 23, beispielsweise PCP'=6, eingefügt sein.

Das dritte Koppel-Kommunikationsgerät 201 entnimmt die Datagramme 100, die in die Tunnel-Datenrahmen 200 eingekapselt sind, aus empfangenen Tunnel-Datenrahmen 200 und leitet die entnommenen Datagramme 100 anhand der Kennung 12 des virtuellen lokalen Netzes und der Prioritätsangabe 13 zum zweiten Kommunikationsgerät weiter. In entsprechender Weise entnimmt das vierte Koppel-Kommunikationsgerät 405 für die Bedien- und Beobachtungsstation 451 bestimmte Datagramme 100 aus Tunnel-Datenrahmen 200 und leitet die Datagramme 100 an die Bedien- und Beobachtungsstation 451 weiter.

## Patentansprüche

1. Verfahren zur Übermittlung zeitkritischer Daten, bei dem
- Datagramme (100) von einem ersten Kommunikationsgerät (103, 105) in einem ersten Teilnetz (1) und zu einem zweiten Kommunikationsgerät (221) in einem zweiten Teilnetz (2) über ein drittes Teilnetz (3) gesendet werden,
- das erste und das dritte Teilnetz über zumindest einen ersten und einen zweiten Router (301) und das zweite und das dritte Teilnetz über zumindest einen dritten Router (302) verbunden sind,
- Datagramme innerhalb des ersten und des zweiten Teilnetzes jeweils mittels Switching weitergeleitet werden,
- Datagramme innerhalb des dritten Teilnetzes mittels Routing weitergeleitet werden,
- das erste Teilnetz eine Ringtopologie aufweist und zumindest ein erstes Koppel-Kommunikationsgerät (101), das mit dem ersten Router verbunden ist, sowie ein zweites Koppel-Kommunikationsgerät (102) umfasst, das mit dem zweiten Router verbunden ist, wobei Datagramme innerhalb des ersten Teilnetzes entsprechend Media Redundancy Protocol, MRP, übermittelt werden,
- das zweite Teilnetz ein drittes Koppel-Kommunikationsgerät (201) umfasst, das mit dem dritten Router verbunden ist und dem eine Netzwerkschicht-Adresse zugeordnet wird,
- das erste und zweite Koppel-Kommunikationsgerät untereinander ein Master-Koppel-Kommunikationsgerät mittels Virtual Router Redundancy Protocol, VRRP, auswählen, wobei beiden Koppel-Kommunikationsgeräten eine gemeinsame virtuelle Netzwerkschicht-Adresse zugeordnet wird und das nicht als Master-Kommunikationsgerät ausgewählte erste oder zweite Koppel-Kommunikationsgerät als Reserve-Koppel-Kommunikationsgerät betrieben wird,
- bei einer geänderten Auswahl oder bei einem Ausfall des Master-Koppel-Kommunikationsgeräts eine MRP-Interconnection-Topologieänderung signalisiert wird,
- durch ein Signalisieren der MRP-Interconnection-Topologieänderung bei Kommunikationsgeräten des ersten Teilnetzes ein erneutes Anlernen ihrer jeweiligen Sicherungsschicht-Adress-Tabellen ausgelöst wird,
- zumindest zwischen dem Master-Koppel-Kommunikationsgerät und dem dritten Koppel-Kommunikationsgerät ein Sicherungsschicht-Tunnel (10) über den ersten oder zweiten Router sowie über den dritten Router durch das dritte Teilnetz aufgebaut wird, wobei die vom ersten Kommunikationsgerät an das zweite Kommunikationsgerät gesendeten Datagramme innerhalb des Sicherungsschicht-Tunnels in Tunnel-Datenrahmen (200) eingekapselt werden und die Tunnel-Datenrahmen, in welche die vom ersten Kommunikationsgerät an das zweite Kommunikationsgerät gesendeten Datagramme jeweils eingekapselt werden, VXLAN Frames oder Frames zur Layer 2 Tunnelung der Datagramme sind,
- ein erster Endpunkt des Sicherungsschicht-Tunnels mit der virtuellen Netzwerkschicht-Adresse des ersten und zweiten Koppel-Kommunikationsgeräts konfiguriert wird,
- ein zweiter Endpunkt des Sicherungsschicht-Tunnels mit der Netzwerkschicht-Adresse des dritten Koppel-Kommunikationsgeräts konfiguriert wird.

2. Verfahren nach Anspruch 1,
bei dem die virtuelle Netzwerkschicht-Adresse des ersten und zweiten Koppel-Kommunikationsgeräts mittels VRRP bereitgestellt wird.

3. Verfahren nach einem der Ansprüche 1 oder 2,
bei dem im ersten Teilnetz Informationen über die virtuelle Netzwerkschicht-Adresse des ersten und zweiten Koppel-Kommunikationsgeräts mittels VRRP Advertisments zur Nutzung des Sicherungsschicht-Tunnels verbreitet werden.

4. Verfahren nach einem der Ansprüche 1 bis 3,
bei dem zumindest das erste und zweite Koppel-Kommunikationsgerät eine Gruppe von Koppel-Kommunikationsgeräten bilden, die einem virtuellen Sicherungsschicht-Tunnelendpunkt zugeordnet sind, bei dem die Koppel-Kommunikationsgeräte aus derselben einem virtuellen Sicherungsschicht-Tunnelendpunkt zugeordneten Gruppe untereinander Informationen über ihren jeweiligen Betriebszustand austauschen und das Master-Koppel-Kommunikationsgerät anhand dieser Informationen auf einen Ausfall überwachen und bei dem sämtliche Reserve-Koppel-Kommunikationsgeräte bei einem Ausfall eines zuvor aktiven Master-Koppel-Kommunikationsgeräts untereinander ein neues Master-Koppel-Kommunikationsgerät auswählen.

5. Verfahren nach einem der Ansprüche 1 bis 4,
bei dem das Master-Koppel-Kommunikationsgerät (101, 102) die vom ersten Kommunikationsgerät (103, 105) an das zweite Kommunikationsgerät (221) gesendeten Datagramme (100) jeweils durch Einfügen in einen Nutzdatenbereich (24) der Tunnel-Datenrahmen (200) einkapselt.

6. Verfahren nach einem der Ansprüche 1 bis 5,
bei dem das erste Kommunikationsgerät (103, 105) in die an das zweite Kommunikationsgerät (221) gesendeten Datagramme (100) eine Kennung (12) eines virtuellen lokalen Netzes sowie eine Prioritätsangabe (13) einfügt, bei dem die Datagramme anhand der Kennung des ersten virtuellen lokalen Netzes und der Prioritätsangabe vom ersten Kommunikationsgerät zum Master-Koppel-Kommunikationsgerät weitergeleitet werden, bei dem das Master-Koppel-Kommunikationsgerät die durch das erste Kommunikationsgerät gesendeten Datagramme jeweils in die Tunnel-Datenrahmen (200) einkapselt und bei dem das dritte Koppel-Kommunikationsgerät die Datagramme, die in die Tunnel-Datenrahmen eingekapselt sind, aus empfangenen Tunnel-Datenrahmen entnimmt und die entnommenen Datagramme anhand der Kennung des virtuellen lokalen Netzes und der Prioritätsangabe zum zweiten Kommunikationsgerät weiterleitet.

7. Verfahren nach einem der Ansprüche 1 bis 6,
bei dem das erste und das zweite Teilnetz zu PROFINET-Zellen zugeordnet sind, bei dem das dritte Teilnetz ein IP-basiertes Transitnetz ist und bei dem die Datagramme PROFINET Frames sind.

8. Verfahren nach einem der Ansprüche 1 bis 7,
bei dem das zweite Teilnetz ein Mobilfunknetz, insbesondere ein 5G-Mobilfunknetz, umfasst und bei dem das dritte Teilnetz ein IP-basiertes Transitnetz ist.

9. Verfahren nach einem der Ansprüche 1 bis 8,
bei dem die MRP-Interconnection-Topologieänderung mittels eines MRP_InTopologyChange-Frames signalisiert wird, bei dem die Sicherungsschicht-Adress-Tabellen jeweils als Forwarding Database ausgestaltet sind und bei dem durch die Signalisierung der MRP-Interconnection-Topologieänderung bei sämtlichen Kommunikationsgeräten des ersten Teilnetzes ein erneutes Anlernen ihrer jeweiligen Forwarding Database ausgelöst wird.

10. Verfahren nach einem der Ansprüche 1 bis 9,
bei dem durch die Signalisierung der MRP-Interconnection-Topologieänderung bei Routern entlang des Sicherungsschicht-Tunnels ein erneutes Anlernen zumindest einer dem ersten Endpunkt des Sicherungsschicht-Tunnels zugeordneten Sicherungsschicht-Adresse ausgelöst wird.

11. Kommunikationssystem zur Durchführung eines Verfahrens nach einem der Ansprüche 1 bis 10 mit
- einem ersten Teilnetz (1), das zumindest ein erstes Kommunikationsgerät (103, 105), ein erstes Koppel-Kommunikationsgerät (101) und ein zweites Koppel-Kommunikationsgerät (102) umfasst,
- einem zweiten Teilnetz (2), das zumindest ein zweites Kommunikationsgerät (221) und ein drittes Koppel-Kommunikationsgerät (201) umfasst,
- einem dritten Teilnetz (3), das zumindest einen ersten Router (301), einen zweiten Router (302) und einen dritten Router (303) umfasst, wobei das erste und das dritte Teilnetz über zumindest den ersten und den zweiten Router und das zweite und das dritte Teilnetz über zumindest den dritten Router verbunden sind,
- wobei die Kommunikationsgeräte und Koppel-Kommunikationsgeräte dazu ausgestaltet sind, Datagramme innerhalb des ersten und des zweiten Teilnetzes jeweils mittels Switching weiterzuleiten,
- wobei die Router dazu ausgestaltet sind, Datagramme innerhalb des dritten Teilnetzes mittels Routing weiterzuleiten,
- wobei das erste Teilnetz eine Ringtopologie aufweist, das erste Koppel-Kommunikationsgerät mit dem ersten Router verbunden ist und das zweites Koppel-Kommunikationsgerät mit dem zweiten Router verbunden ist,
- wobei das erste Teilnetz dafür ausgestaltet ist, dass Datagramme innerhalb des ersten Teilnetzes entsprechend Media Redundancy Protocol, MRP, übermittelt werden,
- wobei das dritte Koppel-Kommunikationsgerät mit dem dritten Router verbunden ist und eine zugeordnete Netzwerkschicht-Adresse aufweist,
- wobei das erste und zweite Koppel-Kommunikationsgerät dazu ausgestaltet sind, untereinander ein Master-Koppel-Kommunikationsgerät mittels Virtual Router Redundancy Protocol, VRRP, auszuwählen und einer gemeinsamen virtuellen Netzwerkschicht-Adresse zugeordnet zu werden,
- wobei das erste und zweite Koppel-Kommunikationsgerät dazu ausgestaltet sind, dass das nicht als Master-Kommunikationsgerät ausgewählte erste oder zweite Koppel-Kommunikationsgerät als Reserve-Koppel-Kommunikationsgerät betrieben wird,
- wobei die Koppel-Kommunikationsgeräte dazu ausgestaltet sind, dass bei einer geänderten Auswahl oder bei einem Ausfall des Master-Koppel-Kommunikationsgeräts eine MRP-Interconnection-Topologieänderung signalisiert wird,
- wobei das erste Teilnetz dafür ausgestaltet ist, dass durch ein Signalisieren der MRP-Interconnection-Topologieänderung bei Kommunikationsgeräten des ersten Teilnetzes ein erneutes Anlernen ihrer jeweiligen Sicherungsschicht-Adress-Tabellen ausgelöst wird,
- wobei die Koppel-Kommunikationsgeräte dazu ausgestaltet sind, dass zwischen dem Master-Koppel-Kommunikationsgerät und dem dritten Koppel-Kommunikationsgerät ein Sicherungsschicht-Tunnel (10) über den ersten oder zweiten Router sowie über den dritten Router durch das dritte Teilnetz aufgebaut wird und dass vom ersten Kommunikationsgerät an das zweite Kommunikationsgerät gesendete Datagramme innerhalb des Sicherungsschicht-Tunnels in Tunnel-Datenrahmen (200) eingekapselt werden, wobei die Tunnel-Datenrahmen, in welche die vom ersten Kommunikationsgerät an das zweite Kommunikationsgerät gesendeten Datagramme jeweils eingekapselt sind, VXLAN Frames oder Frames zur Layer 2 Tunnelung der Datagramme sind,
- wobei die Koppel-Kommunikationsgeräte dazu ausgestaltet sind, dass ein erster Endpunkt des Sicherungsschicht-Tunnels mit der virtuellen Netzwerkschicht-Adresse des ersten und zweiten Koppel-Kommunikationsgeräts konfiguriert wird,
- wobei die Koppel-Kommunikationsgeräte dazu ausgestaltet sind, dass ein zweiter Endpunkt des Sicherungsschicht-Tunnels mit der Netzwerkschicht-Adresse des dritten Koppel-Kommunikationsgeräts konfiguriert wird.

12. Koppel-Kommunikationsgerät zur Durchführung eines Verfahrens nach einem der Ansprüche 1 bis 10, wobei das Koppel-Kommunikationsgerät dazu ausgestaltet ist,
- Datagramme innerhalb eines das Koppel-Kommunikationsgerät umfassenden ersten Teilnetzes mittels Switching weiterzuleiten, wobei das Teilnetz eine Ringtopologie aufweist,
- Datagramme innerhalb des ersten Teilnetzes entsprechend Media Redundancy Protocol, MRP, zu übermitteln,
- als erstes Koppel-Kommunikationsgerät mit einem ersten Router eines dritten Teilnetzes verbunden zu werden oder als zweites Koppel-Kommunikationsgerät mit einem zweiten Router des dritten Teilnetzes verbunden zu werden,
- gemeinsam mit dem ersten oder zweiten Koppel-Kommunikationsgerät untereinander ein Master-Koppel-Kommunikationsgerät mittels Virtual Router Redundancy Protocol, VRRP, auszuwählen und einer gemeinsamen virtuellen Netzwerkschicht-Adresse zugeordnet zu werden,
- dass das nicht als Master-Kommunikationsgerät ausgewählte erste oder zweite Koppel-Kommunikationsgerät als Reserve-Koppel-Kommunikationsgerät betrieben wird,
- dass bei einer geänderten Auswahl oder bei einem Ausfall des Master-Koppel-Kommunikationsgeräts eine MRP-Interconnection-Topologieänderung signalisiert wird,
- dass durch ein Signalisieren der MRP-Interconnection-Topologieänderung bei Kommunikationsgeräten des ersten Teilnetzes ein erneutes Anlernen ihrer jeweiligen Sicherungsschicht-Adress-Tabellen ausgelöst wird,
- dass zwischen dem Master-Koppel-Kommunikationsgerät und einem dritten Koppel-Kommunikationsgerät eines zweiten Teilnetzes ein Sicherungsschicht-Tunnel über den ersten oder zweiten Router sowie über einen dritten Router des dritten Teilnetzes durch das dritte Teilnetz aufgebaut wird und dass von einem ersten Kommunikationsgerät des ersten Teilnetzes an ein zweites Kommunikationsgerät des zweiten Teilnetzes gesendete Datagramme innerhalb des Sicherungsschicht-Tunnels in Tunnel-Datenrahmen eingekapselt werden, wobei die Tunnel-Datenrahmen, in welche die vom ersten Kommunikationsgerät an das zweite Kommunikationsgerät gesendeten Datagramme jeweils eingekapselt sind, VXLAN Frames oder Frames zur Layer 2 Tunnelung der Datagramme sind,
- dass ein erster Endpunkt des Sicherungsschicht-Tunnels mit der virtuellen Netzwerkschicht-Adresse des ersten und zweiten Koppel-Kommunikationsgeräts konfiguriert wird,
- ein zweiter Endpunkt des Sicherungsschicht-Tunnels mit einer Netzwerkschicht-Adresse des dritten Koppel-Kommunikationsgeräts konfiguriert wird.

## Claims

1. Method for transmitting time-critical data, in which
- datagrams (100) are transmitted from a first communication device (103, 105) in a first subnet (1) and to a second communication device (221) in a second subnet (2) via a third subnet (3),
- the first and the third subnet are connected via at least a first and a second router (301) and the second and the third subnet are connected via at least a third router (302),
- datagrams are forwarded within the first and the second subnet in each case by way of switching,
- datagrams are forwarded within the third subnet by way of routing,
- the first subnet has a ring topology and comprises at least a first coupling communication device (101) that is connected to the first router, and a second coupling communication device (102) that is connected to the second router, wherein datagrams are transmitted within the first subnet in accordance with the Media Redundancy Protocol, MRP,
- the second subnet comprises a third coupling communication device (201) that is connected to the third router and to which a network layer address is assigned,
- the first and second coupling communication device select a master coupling communication device among one another by way of the Virtual Router Redundancy Protocol, VRRP, wherein a common virtual network layer address is assigned to both coupling communication devices and the first or second coupling communication device not selected as master communication device is operated as reserve coupling communication device,
- in the event of a changed selection or in the event of failure of the master coupling communication device, an MRP interconnection topology change is signalled,
- as a result of signalling of the MRP interconnection topology change, in communication devices of the first subnet, relearning of their respective data link layer address tables is triggered,
- a data link layer tunnel (10) is set up through the third subnet via the first or second router and via the third router at least between the master coupling communication device and the third coupling communication device, wherein the datagrams transmitted from the first communication device to the second communication device are encapsulated in tunnel data frames (200) within the data link layer tunnel, and the tunnel data frames in which the datagrams transmitted from the first communication device to the second communication device are each encapsulated are VXLAN frames or Layer 2 Tunnelling frames of the datagrams,
- a first endpoint of the data link layer tunnel is configured with the virtual network layer address of the first and second coupling communication device,
- a second endpoint of the data link layer tunnel is configured with the network layer address of the third coupling communication device.

2. Method according to Claim 1,
in which the virtual network layer address of the first and second coupling communication device is provided by way of VRRP.

3. Method according to either of Claims 1 and 2,
in which information about the virtual network layer address of the first and second coupling communication device is broadcast in the first subnet by way of VRRP advertisements in order to use the data link layer tunnel.

4. Method according to one of Claims 1 to 3,
in which at least the first and second coupling communication device form a group of coupling communication devices that are assigned to a virtual data link layer tunnel endpoint, in which the coupling communication devices from the same group assigned to a virtual data link layer tunnel endpoint share information among one another about their respective operating state and monitor the master coupling communication device for failure based on this information and in which, in the event of failure of a previously active master coupling communication device, all reserve coupling communication devices select a new master coupling communication device among one another.

5. Method according to one of Claims 1 to 4,
in which the master coupling communication device (101, 102) encapsulates the datagrams (100) transmitted from the first communication device (103, 105) to the second communication device (221) in each case by inserting them into a payload data field (24) of the tunnel data frames (200).

6. Method according to one of Claims 1 to 5,
in which the first communication device (103, 105) inserts an identifier (12) of a virtual local area network and a priority indication (13) into the datagrams (100) transmitted to the second communication device (221), in which the datagrams are forwarded from the first communication device to the master coupling communication device based on the identifier of the first virtual local area network and the priority indication, in which the master coupling communication device encapsulates the datagrams transmitted by the first communication device in each case in the tunnel data frames (200) and in which the third coupling communication device extracts the datagrams that are encapsulated in the tunnel data frames from received tunnel data frames and forwards the extracted datagrams to the second communication device based on the identifier of the virtual local area network and the priority indication.

7. Method according to one of Claims 1 to 6,
in which the first and the second subnet are assigned to PROFINET cells, in which the third subnet is an IP-based transit network and in which the datagrams are PROFINET frames.

8. Method according to one of Claims 1 to 7,
in which the second subnet comprises a mobile radio network, in particular a 5G mobile radio network, and in which the third subnet is an IP-based transit network.

9. Method according to one of Claims 1 to 8,
in which the MRP interconnection topology change is signalled by way of an MRP_InTopologyChange frame, in which the data link layer address tables are each designed in the form of a forwarding database, and in which, as a result of signalling of the MRP interconnection topology change, in all communication devices of the first subnet, relearning of their respective forwarding database is triggered.

10. Method according to one of Claims 1 to 9,
in which, as a result of signalling of the MRP interconnection topology change, in routers along the data link layer tunnel, relearning of at least one data link layer address assigned to the first endpoint of the data link layer tunnel is triggered.

11. Communication system for performing a method according to one of Claims 1 to 10, including
- a first subnet (1) that comprises at least a first communication device (103, 105), a first coupling communication device (101) and a second coupling communication device (102),
- a second subnet (2) that comprises at least a second communication device (221) and a third coupling communication device (201),
- a third subnet (3) that comprises at least a first router (301), a second router (302) and a third router (303), wherein the first and the third subnet are connected via at least the first and the second router and the second and the third subnet are connected via at least the third router,
- wherein the communication devices and coupling communication devices are designed to forward datagrams within the first and the second subnet in each case by way of switching,
- wherein the routers are designed to forward datagrams within the third subnet by way of routing,
- wherein the first subnet has a ring topology, the first coupling communication device is connected to the first router and the second coupling communication device is connected to the second router,
- wherein the third subnet is designed such that datagrams are transmitted within the first subnet in accordance with the Media Redundancy Protocol, MRP,
- wherein the third coupling communication device is connected to the third router and has an assigned network layer address,
- wherein the first and second coupling communication device are designed to select a master coupling communication device among one another by way of the Virtual Router Redundancy Protocol, VRRP, and to be assigned to a common virtual network layer address,
- wherein the first and second coupling communication device are designed such that the first or second coupling communication device not selected as master communication device is operated as reserve coupling communication device,
- wherein the coupling communication devices are designed such that, in the event of a changed selection or in the event of failure of the master coupling communication device, an MRP interconnection topology change is signalled,
- wherein the first subnet is designed such that, as a result of signalling of the MRP interconnection topology change, in communication devices of the first subnet, relearning of their respective data link layer address tables is triggered,
- wherein the coupling communication devices are designed such that a data link layer tunnel (10) is set up through the third subnet via the first or second router and via the third router between the master coupling communication device and the third coupling communication device and that datagrams transmitted from the first communication device to the second communication device are encapsulated in tunnel data frames (200) within the data link layer tunnel, wherein the tunnel data frames in which the datagrams transmitted from the first communication device to the second communication device are each encapsulated are VXLAN frames or Layer 2 Tunnelling frames of the datagrams,
- wherein the coupling communication devices are designed such that a first endpoint of the data link layer tunnel is configured with the virtual network layer address of the first and second coupling communication device,
- wherein the coupling communication devices are designed such that a second endpoint of the data link layer tunnel is configured with the network layer address of the third coupling communication device.

12. Coupling communication device for performing a method according to one of Claims 1 to 10, wherein the coupling communication device is designed
- to forward datagrams within a first subnet comprising the coupling communication device by way of switching, wherein the subnet has a ring topology,
- to transmit datagrams within the first subnet in accordance with the Media Redundancy Protocol, MRP,
- to be connected to a first router of a third subnet as first coupling communication device or to be connected to a second router of the third subnet as second coupling communication device,
- to select, together with the first or second coupling communication device, a master coupling communication device among one another by way of the Virtual Router Redundancy Protocol, VRRP, and to be assigned to a common virtual network layer address,
- such that the first or second coupling communication device not selected as master communication device is operated as reserve coupling communication device,
- such that, in the event of a changed selection or in the event of failure of the master coupling communication device, an MRP interconnection topology change is signalled,
- such that, as a result of signalling of the MRP interconnection topology change, in communication devices of the first subnet, relearning of their respective data link layer address tables is triggered,
- such that a data link layer tunnel is set up through the third subnet via the first or second router and via a third router of the third subnet between the master coupling communication device and a third coupling communication device of a second subnet and that datagrams transmitted from a first communication device of the first subnet to a second communication device of the second subnet are encapsulated in tunnel data frames within the data link layer tunnel, wherein the tunnel data frames in which the datagrams transmitted from the first communication device to the second communication device are each encapsulated are VXLAN frames or Layer 2 Tunnelling frames of the datagrams,
- such that a first endpoint of the data link layer tunnel is configured with the virtual network layer address of the first and second coupling communication device,
- such that a second endpoint of the data link layer tunnel is configured with a network layer address of the third coupling communication device.

## Revendications

1. Procédé de transmission de données critiques temporellement, dans lequel
- on envoie des datagrammes (100) d'un premier appareil (103, 105) de communication dans un premier réseau (1) partiel et à un deuxième appareil (221) de communication dans un deuxième réseau (2) partiel en passant par un troisième réseau (3) partiel,
- le premier et le troisième réseaux partiels communiquent par au moins un premier et un deuxième routeurs (301) et le deuxième et le troisième réseaux partiels par au moins un troisième routeur (302),
- on achemine des datagrammes au sein du premier et du deuxième réseaux partiels respectivement au moyen d'un switching,
- on achemine des datagrammes au sein du troisième réseau partiel au moyen d'un routage,
- le premier réseau partiel a une topologie annulaire et comprend au moins un premier appareil (101) de communication de couplage, qui communique avec le premier routeur, ainsi un deuxième appareil (102) de communication de couplage, qui communique avec le deuxième routeur, dans lequel on transmet des datagrammes au sein du premier réseau partiel conformément à Media Redundancy Protocol, MRP,
- le deuxième réseau partiel comprend un troisième appareil (201) de communication de couplage, qui communique avec le troisième routeur et auquel est affectée une adresse de couche de réseau,
- le premier et le deuxième appareils de communication de couplage sélectionnent entre eux un appareil de communication de couplage maître au moyen de Virtual Router Redundancy Protocol, VRRP, dans lequel on affecte aux deux appareils de communication de couplage une adresse de couche de réseau virtuelle commune et on fait fonctionner, comme appareil de couplage de réserve, le premier ou le deuxième appareils de communication de couplage qui n'a pas été sélectionné comme appareil de communication maître,
- si la sélection est modifiée ou il se produit une défaillance de l'appareil de communication de couplage maître, on signale une modification de topologie d'interconnexion MRP,
- par un signalement de la modification de topologie d'interconnexion MRP, on déclenche, dans les appareils de communication du premier réseau partiel, un enseignement nouveau de leurs tables d'adresse de couche de sécurité respectives,
- on établit, par le troisième réseau partiel, au moins entre l'appareil de communication de couplage maître et le troisième appareil de communication de couplage, un tunnel (10) de couche de sécurité, en passant par le premier ou le deuxième routeurs ainsi que par le troisième routeur, dans lequel on incorpore, dans des trames de données tunnel dans le tunnel de couche de sécurité, les datagrammes envoyés du premier appareil de communication au deuxième appareil de communication et les trames (200) de données tunnel, dans lesquelles les datagrammes envoyés du premier appareil de communication au deuxième appareil de communication sont incorporés respectivement, sont des trames VXLAN ou des trames pour le tunnelage de couche 2 des datagrammes,
- on configure un premier point de fin du tunnel de couche de sécurité par l'adresse de couche de réseau virtuelle du premier et du deuxième appareils de communication de couplage,
- on configure un deuxième point de fin du tunnel de couche de sécurité par l'adresse de couche de réseau du troisième appareil de communication de couplage.

2. Procédé suivant la revendication 1,
dans lequel on se procure l'adresse de couche de réseau virtuelle du deuxième appareil de communication de couplage au moyen de VRRP.

3. Procédé suivant l'une des revendications 1 ou 2,
dans lequel, dans le premier réseau partiel, on diffuse, au moyen de VRRP advertisment pour l'utilisation du tunnel de couche de sécurité, des informations sur l'adresse de couche de réseau virtuelle du premier et du deuxième appareils de communication de couplage.

4. Procédé suivant l'une des revendications 1 à 3,
dans lequel au moins le premier et le deuxième appareils de communication de couplage forment un groupe d'appareils de communication de couplage, qui est affecté à un point de fin de tunnel de couche de sécurité virtuel, dans lequel les appareils de communication de couplage du même groupe, associé au même point de fin de tunnel à couche de sécurité virtuel, échangent entre eux des informations sur leur état de fonctionnement respectif et l'appareil de communication de couplage maître contrôle une défaillance à l'aide de ces informations et dans lequel l'ensemble des appareils de communication de couplage de réserve sélectionne, lors d'une défaillance d'un appareil de communication de couplage maître actif auparavant, entre eux un nouvel appareil de communication de couplage maître.

5. Procédé suivant l'une des revendications 1 à 4,
dans lequel l'appareil (101, 102) de communication de couplage maître incorpore les datagrammes (100) envoyés du premier appareil (103, 105) de communication au deuxième appareil (221) de communication respectivement par insertion dans une partie (24) de données utiles de la trame (200) de données tunnel.

6. Procédé suivant l'une des revendications 1 à 5,
dans lequel le premier appareil (103, 105) de communication insère, dans les datagrammes (100) envoyés au deuxième appareil (221) de communication, une identification (12) d'un réseau local virtuel ainsi qu'une indication (13) de priorité, dans lequel on achemine, du premier appareil de communication à l'appareil de communication de couplage maître, les datagrammes à l'aide de l'identification du premier réseau local virtuel et de l'indication de priorité, dans lequel l'appareil de communication de couplage maître incorpore respectivement dans la trame (200) de donnés tunnel les datagrammes envoyés par le premier appareil de communication et dans lequel le troisième appareil de communication de couplage prélève, des trames de données tunnel reçues, les datagrammes, qui sont incorporés dans les trames de données tunnel, et achemine les datagrammes prélevés, à l'aide de l'identification du réseau local virtuel et de l'indication de priorité, au deuxième appareil de communication.

7. Procédé suivant l'une des revendications 1 à 6,
dans lequel le premier et le deuxième réseaux partiels sont associés à des cellules PROFINET, dans lequel le troisième réseau partiel est un réseau de transit à base d'IP et dont les datagrammes sont des trames PROFINET.

8. Procédé suivant l'une des revendications 1 à 7,
dans lequel le deuxième réseau partiel comprend un réseau de téléphonie mobile, en particulier un réseau de téléphonie mobile 5G, et dans lequel le troisième réseau partiel est un réseau de transit à base d'IP.

9. Procédé suivant l'une des revendications 1 à 8,
dans lequel on signale la modification de topologie d'interconnexion MRP au moyen d'une trame MRP-in topology change, dans lequel les tables d'adresse de couche de sécurité sont conformées respectivement comme base de données forwarding et dans lequel, par la signalisation de la modification de topologie d'interconnexion MRP, on déclenche, pour l'ensemble des appareils de communication du premier réseau partiel, un nouvel enseignement de leur base de données respective forwarding.

10. Procédé suivant l'une des revendications 1 à 9,
dans lequel, par le signalement de la modification de topologie d'interconnexion MRP pour des routeurs le long du tunnel de couche de sécurité, on déclenche un enseignement renouvelé au moins d'une adresse de couche de sécurité affectée au premier point de fin du tunnel de couche de sécurité.

11. Système de communication pour effectuer un procédé suivant l'une des revendications 1 à 10, comprenant
- un premier réseau (1) partiel, qui comprend au moins un premier appareil (103, 105) de communication, un premier appareil (101) de communication de couplage et un deuxième appareil (102) de communication de couplage,
- un deuxième réseau (2) partiel, qui comprend au moins un deuxième appareil (221) de communication et un troisième appareil (201) de communication de couplage,
- un troisième réseau (3) partiel, qui comprend au moins un premier routeur (301), un deuxième routeur (302) et un troisième routeur (303), dans lequel le premier et le troisième réseaux partiels communiquent en passant par au moins le premier et le deuxième routeurs et le deuxième et le troisième réseaux partiels en passant par au moins le troisième routeur,
- dans lequel les appareils de communication et les appareils de communication de couplage sont conformés pour acheminer des datagrammes au sein du premier et du deuxième réseaux partiels respectivement au moyen d'un switching,
- dans lequel les routeurs sont conformés pour acheminer des datagrammes au sein du troisième réseau partiel au moyen d'un routage,
- dans lequel le premier réseau partiel a une topologie annulaire, le premier appareil de communication de couplage communique avec le premier routeur et le deuxième appareil de communication de couplage communique avec le deuxième routeur,
- dans lequel le premier réseau partiel est conformé pour transmettre des datagrammes au sein du premier réseau partiel conformément à Media Redundancy Protocol, MRP,
- dans lequel le troisième appareil de communication de couplage communique avec le troisième routeur et a une adresse de couche de réseau, qui lui est affectée,
- dans lequel le premier et le deuxième appareils de communication de couplage sont conformés pour sélectionner entre eux un appareil de communication de couplage maître au moyen de Virtual Router Redundancy Protocol, VRRP, et être associés à une adresse de couche de réseau commune virtuelle,
- dans lequel le premier et le deuxième appareils de communication de couplage sont conformés de manière à faire fonctionner, comme appareil de couplage de réserve, le premier ou le deuxième appareils de communication de couplage non sélectionné comme appareil de communication maître,
- dans lequel les appareils de communication de couplage sont conformés de manière à signaler, lors d'une modification de la sélection ou lors d'une défaillance de l'appareil de couplage maître, une modification de topologie d'interconnexion MRP,
- dans lequel le premier réseau partiel est conformé pour, par une signalisation de la modification de topologie d'interconnexion MRP auprès des appareils d'interconnexion du premier réseau partiel, déclencher un nouvel enseignement de leur table d'adresse de couche de sécurité respective,
- dans lequel les appareils de communication de couplage sont conformées pour établir, par le troisième réseau partiel, en passant par le premier ou le deuxième routeurs ainsi que par le troisième routeur, entre l'appareil de communication de couplage maître et le troisième appareil de communication de couplage, un tunnel (10) de couche de sécurité, et en ce que des datagrammes, envoyés du premier appareil de communication au deuxième appareil de communication, sont incorporés dans des trames (200) de données tunnel dans le tunnel de couche de sécurité, les trames de données tunnel, dans lesquelles sont incorporés respectivement les datagrammes envoyés du premier appareil de communication au deuxième appareil de communication, sont des trames VXLAN ou des trames pour le tunnelage de couche 2 des datagrammes,
- dans lequel les appareils de communication de couplage sont conformés de manière à configurer un premier point de fin du tunnel de couche de sécurité par l'adresse de couche de réseau virtuelle du premier et du deuxième appareils de communication de couplage,
- dans lequel les appareils de communication de couplage sont conformés de manière à configurer un deuxième point de fin du tunnel de couche de sécurité par l'adresse de couche de réseau du troisième appareil de communication de couplage.

12. Appareil de communication de couplage pour effectuer un procédé suivant l'une des revendications 1 à 10, dans lequel l'appareil de communication de couplage est conformé pour
- acheminer, au moyen d'un switching, des datagrammes au sein d'un premier réseau partiel comprenant l'appareil de communication de couplage, le réseau partiel ayant une topologie annulaire,
- transmettre des datagrammes au sein du premier réseau partiel, conformément à Media Redundancy Protocol, MRP,
- être en communication comme premier appareil de communication de couplage avec un premier routeur d'un troisième réseau partiel ou comme deuxième appareil de communication de couplage avec un deuxième routeur du troisième réseau partiel,
- sélectionner conjointement par le premier ou le deuxième appareils de communication de couplage entre eux un appareil de communication de couplage maître, au moyen de Virtual Routeur Redundancy Protocol, VRRP, et être affectés à une adresse de couche de réseau virtuelle commune,
- en ce que l'on fait fonctionner, comme appareil de communication de couplage de réserve, le premier ou le deuxième appareils de communication de couplage non sélectionné comme appareil de communication maître,
- en ce que, lors d'un changement de sélection ou lors d'une défaillance de l'appareil de communication de couplage maître, une modification de topologie d'interconnexion MRP est signalée,
- en ce que, par une signalisation de la modification de topologie d'interconnexion MRP, on déclenche, auprès des appareils de communication du premier réseau partiel, un enseignement renouvelé de leurs tables d'adresses de couche de sécurité respectives,
- en ce que l'on établit, par le troisième réseau partiel, en passant par le premier ou le deuxième routeur ainsi qu'en passant par un troisième routeur du troisième réseau partiel par, entre l'appareil de communication de couplage maître et un troisième appareil de communication de couplage d'un deuxième réseau partiel, un tunnel de couche de sécurité et en ce que l'on incorpore, dans des trames de données de tunnel dans le tunnel de couche de sécurité, des datagrammes envoyés d'un premier appareil de communication du premier réseau à un deuxième appareil de communication du deuxième réseau partiel, dans lequel les trames de données tunnel, dans lesquelles les datagrammes envoyés du premier appareil de communication au deuxième appareil de communication sont incorporés, sont des trames VXLAN ou des trames pour un tunnelage de couche 2 des datagrammes,
- en ce que l'on configure un premier point de fin du tunnel de couche de sécurité par l'adresse de couche de réseau virtuelle du premier et du deuxième appareils de communication de couplage,
- en ce que l'on configure un deuxième point de fin du tunnel de couche de sécurité par l'adresse de couche de réseau du troisième appareil de communication de couplage.
